# EUROPÄISCHE PATENTANMELDUNG

(11) **EP 1 221 675 A2**
(43) Veröffentlichungstag der Anmeldung: **10.07.2002**
(21) Anmeldenummer: 01250426.2
(22) Anmeldetag: 03.12.2001
(51) Int. Cl.: G07B 17/00

(54) **Verfahren zum Vermitteln von Versandaufträgen für Poststücke und System zur Durchführung des Verfahrens**

(30) Priorität: 19.12.2000 DE 10064795
(71) Anmelder: Francotyp-Postalia AG & Co. KG, 16547 Birkenwerder (DE)
(72) Erfinder: Thiel, Wolfgang Dr., 13503 Berlin (DE)

(57) **Zusammenfassung**

Verfahren zum Vermitteln von Versandaufträgen für Poststücke zwischen einem Versender und wenigstens einem Carrier, dessen Dienste zum Befördern des Poststücks zu einem Empfänger genutzt werden, wobei die Vermittlung durch einen Vermittler erfolgt, umfassend die Schritte: Entgegennahme des Versandauftrags des Versenders für wenigstens ein Poststück durch den Vermittler, Auswahl eines Carriers aus einer Anzahl verfügbarer Carrier nach wenigstens einem vorbestimmten Auswahlkriterium, wobei diese Auswahl vor oder nach Eingang des Versandauftrags beim Vermittler erfolgt, und Weitergeben des Versandauftrages vom Vermittler an den ausgewählten Carrier. System zur Durchführung des Verfahrens.

## Beschreibung

### Gebiet der Erfindung

Die Erfindung betrifft ein Verfahren zum Vermitteln von Versandaufträgen für Poststücke zwischen einem Versender und wenigstens einem Carrier, dessen Dienste zum Befördern des Poststücks zu einem Empfänger genutzt werden, wobei die Vermittlung durch einen Vermittler erfolgt. Sie betrifft weiterhin ein System zum Vermitteln von Versandaufträgen für Poststücke zwischen einem Versender und wenigstens einem Carrier.

### Technischer Hintergrund

Der zukünftige Markt für die Beförderung von Briefpost wird dadurch gekennzeichnet sein, dass die staatlichen Postmonopole im Zuge einer Liberalisierung schrittweise aufgegeben werden. Für die Kunden, also die Versender, welche Briefpost zu versenden wünschen, eröffnen sich damit neue Alternativen. Es werden neben den bisherigen Monopolisten zusätzliche so genannte Carrier, d. h. Postbeförderer für den Transport von Briefpost verfügbar sein, die sich voneinander durch unterschiedliche Dienstleistungen und Tarife abgrenzen werden.

Das für Geschäftskunden bislang dominierende Abrechnungssystem besteht darin, dass der Versender seine Ausgangspost mittels einer Frankiermaschine abrechnet und die Frankiermaschine eine Bestätigung dieser Abrechnung in Form eines Frankierabdruckes auf den Brief druckt. Die Frankiermaschine besitzt einen Satz an Registern von denen eines um den frankierten Betrag reduziert wird (so genanntes descending register). Ist das Register leer, muss es erneut mit geldwerten Daten aufgefüllt werden. Dies erfolgt nach dem letzten Stand der Technik weitgehend automatisch, indem per Datenfernübertragung diese geldwerten Daten aus einem entfernten Datenzentrum in die Frankiermaschine geladen werden. Dieser Datentransfer ebenso wie die Speicherung und Abrechnung der Daten in der Frankiermaschine muss den Sicherheitsanforderungen der Postbehörden genügen.

Diese spezifizierten Anforderungen sollen eine Manipulation der Daten zum Nachteil des Postunternehmens verhindern. Ein Beispiel für aktualisierte Sicherheitsanforderungen ist das Information Based Indicia Program (IBIP) des United States Postal Service (USPS), das die kryptografische Verschlüsselung von Daten und deren Abdruck in Form eines zweidimensionalen Barcodes fordert.

Die Sicherheitsstandards der einzelnen nationalen Postbehörden unterscheiden sich erheblich. Während beispielsweise die USPS für die Datenverschlüsselung ein Public Key Verfahren fordert ist es bei der Französischen Post ein Secret Key Verfahren. Das zwingt die internationalen Hersteller von Frankiersystemen dazu, ihre Produkte auf die jeweiligen Anforderungen der nationalen Postbehörden auszurichten, was mit zusätzlichen Kosten verbunden ist.

Die Mehrzahl der nationalen Postbehörden verwendet ein so genanntes prepaid-Verfahren für die Bezahlung der Postdienstleistung. Die Geldbeträge, für welche der Postkunde in einem absehbaren Zeitraum die Postdienstleistung in Anspruch zu nehmen wünscht, müssen auf einem Bankkonto verfügbar sein. Dieses Portogeld wird vom Postkunden mittels seiner Frankiermaschine vom Datenzentrum des Frankiermaschinenherstellers angefordert. Dieses Datenzentrum transferiert den angeforderten Geldbetrag vom Bankkonto des Kunden in die Frankiermaschine, von wo schließlich die einzelnen Frankierbeträge abgebucht werden. Ist der entsprechende Speicher der Frankiermaschine leer, beginnt dieser Vorgang von neuem.

Nachteilig für den Kunden ist die Notwendigkeit, stets für ein ausreichend gefülltes Bankkonto zu sorgen. Ein weiterer Nachteil besteht darin, dass er für den dort vorgehaltenen Geldbetrag keine Zinsen erhält.

Einige Postbehörden, wie z.B. die französische Post, betreiben ein so genanntes postpaid-Verfahren. Dabei wird im Speicher der Frankiermaschine der Betrag registriert, für welchen in einer zurückliegenden Periode Post frankiert wurde. In bestimmten Abständen wird dieser Speicher von einer durch die Postbehörde autorisierten Person abgelesen und dem Kunden eine entsprechende Rechnung zugestellt.

Für die Postbehörde bedeutet diesen Verfahren einen hohen Personalund damit Kostenaufwand. Die Existenz dieser zwei verschieden Zahlungsverfahren bedeutet für den Hersteller der Frankiermaschinen, dass er zwei sich hinsichtlich des Abrechnungsverfahrens unterschiedliche Typen von Frankiermaschinen entwickeln muss, sowie zwei unterschiedliche Infrastruktursysteme betreiben muss.

Weiterhin ist die gegenwärtige Handhabung von Frankiersystemen dadurch gekennzeichnet, dass der Frankierwert für einen speziellen Brief oder ein Paket von der Frankiermaschine auf der Basis von eingegeben oder ermittelten Werten mit Hilfe einer Portotabelle errechnet wird. Solche Werte können sein, das Briefgewicht, die Größe und die Versandart, wie z.B. Eilbrief, Brief mit Rückschein etc. Die Portotabellen, welche aus diesen Werten die jeweiligen Porti berechnen, sind in einem speziellen Speicher der Frankiermaschine gespeichert.

Ändert die Postbehörde ihre Portotarife, muss der Inhalt dieses Speichers erneuert werden. Dies geschieht meist dadurch, dass ein Servicetechniker des Herstellers den Speicherbaustein beim Kunden austauschen muss. Dies ist mit erheblichen Kosten verbunden. Ein verbessertes Verfahren sieht die elektronische Übermittlung der Daten der neuen Portotabelle vor. Voraussetzung für dieses Verfahren ist aber eine Datenleitung zwischen Datenzentrum des Herstellers und Frankiermaschine des Postkunden. Aber selbst dann ergibt sich das Problem, dass die Postkunden die neue Portotabelle verfügbar haben müssen, wenn die neuen Portotarife gelten, welches eine quasi parallele Übermittlung der Daten an unter Umständen 100.000 Frankiermaschinen bedeutet. Auch dieses Verfahren ist mit erheblichem Aufwand verbunden.

Der sich abzeichnende liberalisierte Markt für Briefpost stellt die Sinnfälligkeit dieser bisherigen technischen und logistischen Systeme in Frage. Eine Antwort auf diese Herausforderung ist eine multicarrierfähige Frankiermaschine, wie sie im Patent US 5,699,258 der Anmelderin offenbart ist. Mit dieser hat der Postkunde die Möglichkeit zwischen den Angeboten verschiedener konkurrierender Carrier auszuwählen und den für seinen speziellen Auftrag günstigsten Carrier zu bestimmen.

Nachteilig für den Postkunden ist der Aufwand bei der Einholung der Angebotsdaten und der Durchführung eines Vergleiches. Auch wenn der Postkunde hierfür mit entsprechenden Programmen versorgt wird, die beides unterstützen, wird doch zumindest der apparative Aufwand vor Ort weiter vergrößert. Die Angebotsdaten der einzelnen Carrier müssen vor Ort gespeichert und ggf. aktualisiert werden.

Ein weiterer Nachteil liegt darin, dass der Kunde mit vielen verschiedenen Carriern abrechnen muss, was seinen Verwaltungsaufwand zusätzlich erhöht.

Der vorliegenden Erfindung liegt daher die Aufgabe zugrunde, ein Verfahren sowie ein System zur Verfügung zu stellen, welches es dem Versender von Poststücken in einfacher Weise ermöglicht, mit möglichst geringem Technik- und Verwaltungsaufwand die Beförderung seiner Poststücke nach vorbestimmten Auswahlkriterien unter Nutzung der Dienste unterschiedlicher Carrier zu organisieren.

### Beschreibung der Erfindung

Diese Aufgabe wird durch ein Verfahren zum Vermitteln von Versandaufträgen für Poststücke zwischen einem Versender und wenigstens einem Carrier, dessen Dienste zum Befördern des Poststücks zu einem Empfänger genutzt werden, gelöst, bei dem die Vermittlung durch einen Vermittler erfolgt. Dieses umfasst erfindungsgemäß folgende Schritte: die Entgegennahme des Versandauftrags des Versenders für wenigstens ein Poststück durch den Vermittler, die Auswahl eines Carriers aus einer Anzahl verfügbarer Carrier nach wenigstens einem vorbestimmten Auswahlkriterium, wobei diese Auswahl vor oder nach Eingang des Versandauftrags beim Vermittler erfolgt, sowie das Weitergeben des Versandauftrages vom Vermittler an den ausgewählten Carrier.

Die erfinderische Lösung geht von dem Gedanken aus, dass der Verwaltungsaufwand für den Versender deutlich dadurch reduziert werden kann, dass er nicht selbst mit den einzelnen unterschiedlichen Carriern, die je nach der erfolgten Auswahl seinen Versandauftrag ausführen, selbst kommunizieren z. B. abrechnen muss, sondern er nur noch mit einem einzigen Ansprechpartner, z. B. zur Abrechnung, zu tun hat, dem Vermittler.

Hierdurch reduziert sich in der Regel zudem sein technischer Aufwand, da sich bei dem erfindungsgemäßen Verfahren die Anschaffung einer oben beschriebenen, aufwändigen und teueren multicarrierfähigen Frankiermaschine erübrigt.

Die Auswahl des Carriers kann vor oder bei Erstellung des Versandauftrages durch den Versender selbst erfolgen, sofern ihm die entsprechenden Informationen für die Auswahl zur Verfügung stehen. Hierbei kann der Vermittler wiederum in der oben beschriebenen vorteilhaften Weise zur Reduktion des Aufwands für den Versender beitragen, indem er die betreffenden Informationen von den einzelnen Carriern sammelt und die für den Versender relevanten Informationen übermittelt.

Der Aufwand für den Versender reduziert sich hierbei zudem insofern als er den Carrier-Markt nicht überwachen muss. Dies kann der Vermittler erledigen. Insbesondere kann der Vermittler dem Versender umgehend Informationen, z. B. Auswahldaten und -kriterien, zu neuen Carriern übermitteln, die sich in der Regel mit besonders günstigen Angeboten am Markt zu etablieren versuchen werden.

Bei bevorzugten Varianten des erfindungsgemäßen Verfahrens erfolgt die Auswahl des Carriers durch den Vermittler nach der Entgegennahme des Versandauftrags. Dieser Variante liegt die Überlegung zu Grunde, dass die Speicherung der Angebotsdaten der verschiedenen Carrier und deren Aktualisierung, sowie die Bestimmung des jeweils geeigneten Carriers effizienter als zentrale Dienstleistung erfolgen kann. Der Verwaltungsaufwand für die Auswahl des Carriers entfällt dann beim Versender vollständig.

Die Auswahl des Carriers kann nach den unterschiedlichsten Auswahlkriterien erfolgen. Hierbei können natürlich unterschiedlichste Aspekte bzw. Unterkriterien berücksichtigt und miteinander kombiniert werde. So wird ein Teil der Carrier keine flächendeckende Auslieferung anbieten können. Dateien mit jenen Adressen, an welche die jeweiligen Carriern ausliefern, können vom Vermittler zentral verwaltet und von den jeweils interessierten Versender abgefragt bzw. für deren Versandauftrag berücksichtigt werden.

Die Auswahl wird sich häufig auf die Auswahl des günstigsten Beförderers konzentrieren. Es können alternativ, zusätzlich oder in beliebiger Kombination aber natürlich auch andere oder weitere Kriterien wie Schnelligkeit der Beförderung, Gewährleistung der Zustellung, Versicherung des Poststücks, Abholung des Poststücks etc. berücksichtigt werden, welche für den Versender von Interesse sind. So kann beispielsweise der Carrier ausgewählt werden, der das Poststück zum günstigsten Preis abholt und innerhalb eines Tages zu einem bestimmten Zielort bringt.

Für die Kriterien kann der Versender eine bestimmte Gewichtung vornehmen. Diese Gewichtung kann insbesondere bei Auswahl des Carriers durch den Vermittler beispielsweise auch in einem Kundenprofil abgelegt sein, nach dem der Vermittler die Auswahl trifft und das der Versender bevorzugt jederzeit ändern kann. Es ist aber auch möglich, die Gewichtung mit jedem Versandauftrag vorzugeben.

Bevorzugt erfolgt die Abrechnung des Beförderungsentgeltes für das Poststück zwischen dem ausgewählten Carrier und dem Vermittler: Dieser stellt dem Versender wiederum einen Rechnungsbetrag in Rechnung. Hierbei bucht der Vermittler den Rechnungsbetrag vorzugsweise von einem Versender-Konto des Versenders nach einem vorbestimmten Abbuchungskriterium ab.

Das Abbuchungskriterium kann ein zeitliches Kriterium sein. So kann vereinbart sein, dass die Abbuchung zu einem bestimmten Zeitpunkt, beispielsweise wöchentlich jeweils am Wochenanfang, erfolgt. Ebenso kann es sich um ein Mengenkriterium handeln. So kann nach Eingang und Ausführung einer bestimmter Menge von Versandaufträgen abgebucht werden. Es versteht sich natürlich, dass diese Kriterien auch miteinander kombiniert werden können und dabei bestimmten Vorrang haben können. So kann beispielsweise vorgesehen sein, dass die Abbuchung jeweils nach Ablauf eines bestimmten Zeitraumes erfolgt, in jedem Fall aber nach Erreichen einer bestimmten Menge an Poststücken, unabhängig davon, ob der vorgegebene Zeitraum seit der letzten Abrechnung bereits abgelaufen ist.

Bei bevorzugten Varianten bucht der Vermittler den Rechnungsbetrag unmittelbar nach Eingang des Versandauftrags und Auswahl des Carriers von einem Versender-Konto des Versenders ab, um einen zeitnahen Überblick über die anfallenden Kosten zu wahren.

Bei besonders vorteilhaften Ausführungsformen des erfindungsgemäßen Verfahrens überweist der Vermittler das Beförderungsentgelt auf ein Carrier-Konto des ausgewählten Carriers nach einem vorbestimmten Überweisungskriterium. Für dieses Überweisungskriterium bestehen dieselben Möglichkeiten wie für das oben genannte Abbuchungskriterium.

Bevorzugt werden alle Informationsprozesse bei einem Vermittler zusammengefasst. Alle drei beteiligten Parteien - die Versender, die Carrier und die Vermittler - können aus diesem System ihren speziellen Nutzen ziehen:

Die Versender sind nicht gezwungen diverse Bankkonten für verschiedene Carrier einzurichten. Auch müssen sie gegebenenfalls nicht ständig die diversen und kurzlebigen Tarifstrukturen verschiedener Carrier im Auge behalten und Vergleiche durchführen. Zudem wird ein Teil der Carrier keine flächendeckende Auslieferung anbieten können. Dateien mit jenen Adressen, an welche die jeweiligen Carriern ausliefern, können vom Vermittler zentral verwaltet und von den jeweils interessierten Postkunden abgefragt werden. Die Postkunden haben es jedenfalls nur mit einem kompetenten und unabhängigen Partner zu tun, dem Vermittler.

Die Carrier werden nicht mit der Einzelabrechnung von Briefversand konfrontiert, obgleich ihren Kunden diese Abrechnungsart gegenüber dem Vermittler zur Verfügung steht. Insbesondere für neu in den Briefmarkt eintretende Carrier fällt damit erheblicher logistischer Aufwand weg und der Einstieg in den Postversandmarkt wird erleichtert.

Der Vermittler kann als Großkunde bei den Carriern günstig Postdienstleistungen einkaufen und einen Teil dieser Rabatte für seinen Service einbehalten. Allein der Vermittler bestimmt nach welchen Prozeduren und mit welchen technischen Mitteln der Versender bei ihm seine Transportaufträge abrechnet. Diese Mittel können an den Versender verkauft oder vermietet werden. Es kann sich dabei um die bisherigen "eindimensionalen" Frankiermaschinen handeln, die statt mit einem nationalen Postmonopolisten dann mit dem Vermittler abrechnen. Es könnten aber auch Frankiermaschinen sein, die auf Kontokorrent umgestellt sind (postpaid statt prepaid). Auf jeden Fall entfällt der Aufwand, mehrere Sicherheitsmodule, nämlich eines für jeden Carrier in der Frankiermaschinen vorsehen zu müssen.

Um durch eine Stellung als Großkunde möglichst günstige Konditionen von den jeweiligen Carriern erhalten zu können, kann vorgesehen sein, dass der Vermittler vorab von dem ausgewählten Carrier eine bestimmte Transportkapazität erwirbt.

Es kann jedoch auch vorgesehen sein, dass der Vermittler nicht per se Transportoptionen von den Carriern kauft, sondern Geld erst nach eingegangenen bzw. ausgeführten Versandaufträgen überweist. Der Vermittler braucht dann keine finanzielle Vorleistung erbringen, kann aber auch nicht im ursprünglichen Maße Rabatte erzielen. Eine Mischform ergibt sich bei Vereinbarung einer Mindestabnahme an Transportoptionen.

Bei einem weiteren erfindungsgemäßen Verfahren zum Weiterleiten von Poststücken auf dem Weg von einem Versender zu einem Empfänger durch einen Vermittler übernimmt der Vermittler zusätzlich zu den geschilderten Aufgaben die Weiterleitung des Poststücks an den ausgewählten Carrier.

Bei bevorzugten Varianten des erfindungsgemäßen Verfahrens ist sichergestellt werden, dass letztlich genau die Postversandstücke transportiert werden, für welche auch das Entgelt berechnet wird. Dazu kommen prinzipiell bereits bekannte Sicherheitstechniken in Betracht. Ihre jeweilige Anwendung ist eine Frage des Aufwandes in Bezug auf die Betrugswahrscheinlichkeit:

So kann der Versender seine nicht weiter gekennzeichneten Versandstücke an den Carrier oder den Vermittler übergeben. Auf Grund langjähriger Lieferbeziehungen besteht ein hinreichendes Vertrauensverhältnis.

Ebenso kann vorgesehen sein, dass der Vermittler für jeden Versandauftrag eine Identifikationskennung, beispielsweise eine Buchstabenund/oder Ziffernkombination erzeugt. Diese Identifikationskennung wird sowohl an den betreffenden Carrier, als auch an den Versender übermittelt. Auf der Versenderseite wird das entsprechende Poststück mit dieser Identifikationskennung gekennzeichnet. Bei Stapelpost wird eine entsprechende Identifikationskennung des Stapels erzeugt, z. B. gedruckt. Bei Übergabe des Poststücks an den Vermittler oder Carrier werden die Identifikationskennung des Versandauftrags und die Identifikationskennung des jeweiligen Poststücks miteinander verglichen.

Bei bevorzugten Varianten des erfindungsgemäßen Verfahrens erzeugt der Vermittler nach Eingang des Versandauftrages ein Paar aus einer ersten Identifikationskennung zum Verknüpfen mit dem Poststück und einer zweiten Identifikationskennung zur Weitergabe an den Carrier, die miteinander in einer vorgegebenen Beziehung stehen. Der Vermittler generiert beispielsweise für jeden Versandauftrag ein Paar Kryptozahlen und meldet diese sowohl an den betreffenden Carrier, als auch an den Versender. Auf der Versenderseite werden das bzw. die Poststücke gekennzeichnet. Bei Übergabe des Poststücks an den Vermittler oder Carrier werden die Identifikationskennung des Versandauftrags und die Identifikationskennung des jeweiligen Poststücks miteinander verglichen. So kann beispielsweise der Abholer des beauftragten Carriers, z.B. mittels eines entsprechend programmierten Notebooks etc., über die Möglichkeit verfügen die Authentizität der Kennzeichnung zu prüfen. Alternativ kann diese Prüfung auch bei Eingang der Versandstücke im Verteilzentrum des Carriers erfolgen, z.B. durch (stichprobenartiges) Scannen der Eingangspost. In derselben Weise kann dies natürlich auch bei Übergabe des Poststücks vom Versender an den Vermittler erfolgen.

Der Vermittler kann, je nach Sicherheitsbedürfnis der einzelnen Carrier, unterschiedliche Sicherheitssysteme anbieten und betreiben. Damit eröffnet er für alle Versender die Möglichkeit, an eine Vielzahl von am System beteiligte Carrier Versandaufträge zu erteilen, ohne dass sich der Versender um deren spezielle Sicherheitsanforderungen kümmern muss.

Bei einer weiteren Variante des erfindungsgemäßen Verfahrens ist der Vermittler selbst Anlieferungs- und Verteilzentrum für die Poststücke. Er kann die Poststücke beim Versender durch von ihm beauftragte Personen oder Dienste abholen lassen, oder der Postkunde liefert selbst die Poststücke ab, z.B. in dafür vorgesehene Briefkästen.

Der Brief oder der Briefstapel enthält dann eine Kennzeichnung des Frankierwertes und des Carriers. Ist diese Kennzeichnung maschinenlesbar, z.B. durch einen Barcode wird zudem eine dritte Abrechnungsform ermöglicht. Dabei löst der im Einlieferungs- und Verteilzentrum mittels der mit ihm verknüpften Identifikationskennung erfasste Brief oder Briefstapel unmittelbar die Abrechnung der Postdienstleistung für den Versender aus.

In einer Untervariante enthält der Brief lediglich eine maschinenlesbare Identifikationskennung. Auf der Basis der erfassten Identifikationskennung, beispielsweise eines gescannten Codes wird im Datenzentrum des Versenders der Versandauftragsdatensatz für den Brief bzw. Briefstapel identifiziert. Der Vorteil dieses Verfahrens liegt darin, dass der Versender nur dann mit Versandgebühren belastet wird, wenn das Poststück von ihm tatsächlich auf den Versandweg gebracht wurde. Ein weiterer Vorteil ergibt sich dadurch, dass der Versender seine Tagespost an nur einer Stelle einliefern kann oder von nur einem Dienst abholen lässt, obwohl seine Poststücke von unterschiedlichen Carriern an die Adressaten zugestellt werden soll.

Die vorliegende Erfindung betrifft weiterhin ein weiteres Verfahren zum Vermitteln von Versandaufträgen für Poststücke zwischen einem Versender und wenigstens einem Carrier, dessen Dienste zum Befördern des Poststücks zu einem Empfänger genutzt werden. Auch bei diesem weiteren Verfahren erfolgt die Vermittlung durch einen Vermittler. Zunächst erwirbt der Vermittler vorab eine bestimmte Transportkapazität von dem Carrier. Dann erfolgt die Entgegennahme des Versandauftrags des Versenders für wenigstens ein Poststück durch den Vermittler. Dieser Versandauftrag wird dann wiederum vom Vermittler an den Carrier unter Inanspruchnahme wenigstens eines Teiles der vorab erworbenen Transportkapazität weitergegeben.

Diesem Verfahren liegt die Idee zu Grunde, dass sich die oben geschilderten Vorteile für alle Beteiligten nicht nur im Zusammenspiel zwischen dem Vermittler und mehreren Carriern erzielen lassen, sondern gegebenenfalls auch im Zusammenspiel mit nur einem Carrier.

So kann der Vermittler durch die Bündelung der Versandaufträge mehrerer Versender und das damit erzielbare Versandvolumen beim Carrier attraktive Preisnachlässe bzw. Konditionen erzielen. Diese kann er dann wieder zumindest zum Teil an die Versender weitergeben.

Bevorzugt erfolgt auch hier die Abrechnung des Beförderungsentgeltes für das Poststück zwischen dem Carrier und dem Vermittler und der Vermittler stellt dem Versender einen Rechnungsbetrag in Rechnung.

Weiter vorzugsweise bucht der Vermittler den Rechnungsbetrag von einem Versender-Konto des Versenders nach einem vorbestimmten Abbuchungskriterium ab, wie dies oben schon ausführlich beschrieben wurde. Die Abbuchung des Rechnungsbetrags erfolgt auch hier bevorzugt nach Eingang des Versandauftrags von einem Versender-Konto des Versenders.

Bei weiteren günstigen Ausgestaltungen des erfindungsgemäßen Verfahrens erzeugt der Vermittler nach Eingang des Versandauftrages ein Paar aus einer ersten Identifikationskennung zum Verknüpfen mit dem Poststück und einer zweiten Identifikationskennung zur Weitergabe an den Carrier, die miteinander in einer vorgegebenen Beziehung stehen, wie dies ebenfalls oben schon ausführlich beschrieben wurde. Diese leitet er dann an den Versender bzw. den Carrier weiter.

Bei bevorzugten Varianten des erfindungsgemäßen Verfahrens nimmt der Vermittler das Poststück entgegen und leitet es an den Carrier weiter. Hierbei kann er zusätzlich, beispielsweise durch eine Vorsortierung der Poststücke weitere Preisreduktionen beim Carrier erzielen.

Die vorliegende Erfindung betrifft weiterhin ein System zum Vermitteln von Versandaufträgen für Poststücke zwischen einem Versender und wenigstens einem Carrier, dessen Dienste zum Befördern des Poststücks zu einem Empfänger genutzt werden. Das erfindungsgemäße System umfasst wenigstens eine Versender-Datenverarbeitungseinrichtung und eine zentrale Vermittler-Datenverarbeitungseinrichtung. Die Versender-Datenverarbeitungseinrichtung ist mit der Vermittler-Datenverarbeitungseinrichtung über eine Kommunikationsverbindung verbindbar. Sie ist weiterhin zum Übersenden eines Versandauftrags des Versenders für wenigstens ein Poststück an die Vermittler-Datenverarbeitungseinrichtung ausgebildet.

Die Vermittler-Datenverarbeitungseinrichtung und zusätzlich oder alternativ die Versender-Datenverarbeitungseinrichtung ist bzw. sind zur Auswahl eines Carriers aus einer Anzahl verfügbarer Carrier nach wenigstens einem vorbestimmten Auswahlkriterium ausgebildet, wobei diese Auswahl vor oder nach Eingang des Versandauftrags beim Vermittler erfolgt.

Mit diesem System ist es möglich, das oben beschriebene Verfahren zum Vermitteln von Versandaufträgen für Poststücke in besonders rationeller Weise durchzuführen und so die bereits oben beschriebenen Vorteile des Verfahrens noch weiter zu steigern.

Die Auswahl des Carriers ist vorzugsweise zumindest so weit automatisiert, dass dem Bediener der betreffenden Datenverarbeitungseinrichtung ein Vorschlag für einen Carrier oder eine Liste mit Carriern ausgegeben wird, den er dann durch eine Eingabe in die Datenverarbeitungseinrichtung akzeptiert bzw. aus der er dann durch eine entsprechende Eingabe den gewünschten Carrier auswählt.

Die betreffende Datenverarbeitungseinrichtung ist bevorzugt weiterhin so ausgestaltet, dass das Auswahlkriterium von dem jeweiligen Benutzer durch eine entsprechende Eingabe frei vorgegeben werden kann. Er kann hierbei die oben beschriebenen Unterkriterien bevorzugt beliebig kombinieren und gegebenenfalls gewichten. Hierbei wird er bevorzugt durch die Datenverarbeitungseinrichtung in Form von Zusätzlichen Hilfsinformationen unterstützt. Ebenso ist es möglich, dass bestimmte Auswahlprofile mit unterschiedlichen Auswahlkriterien in der Datenverarbeitungseinrichtung gespeichert werden können, welche der Benutzer dann nach Bedarf abrufen kann.

Weiter vorzugsweise ist die Auswahl so weit automatisiert, dass der Benutzer bis auf eine möglicherweise nötige erstmalige Eingabe des Auswahlkriteriums bzw. Änderung des Auswahlkriteriums keine weiteren Eingaben des Benutzers erforderlich sind.

Bei günstigen, weil weiter automatisierten Weiterbildungen des erfindungsgemäßen Systems ist eine Carrier-Datenverarbeitungseinrichtung des ausgewählten Carriers vorgesehen, welche mit der Vermittler-Datenverarbeitungseinrichtung über eine Kommunikationsverbindung verbunden werden kann. Weiterhin ist die Vermittler-Datenverarbeitungseinrichtung zum Weitergeben des Versandauftrages an die Carrier-Datenverarbeitungseinrichtung des ausgewählten Carriers ausgebildet. Auch hier kann die Weitergabe automatisiert, d.h. ohne gesonderte Eingabe eines Bedieners erfolgen.

Aus den bereits oben genannten Gründen hinsichtlich der einfacheren und rationelleren Konzentration der Informationen bezüglich der Konditionen der einzelnen Carrier beim Vermittler ist bevorzugt die Vermittler-Datenverarbeitungseinrichtung zur Auswahl des Carriers nach Eingang des Versandauftrags ausgebildet.

Bei vorteilhaften Varianten des erfindungsgemäßen Systems ist die Vermittler-Datenverarbeitungseinrichtung zum Zugriff auf ein Versender-Konto zur Reduzierung des Versender-Kontos um einen Rechnungsbetrag ausgebildet. Die Vermittler-Datenverarbeitungseinrichtung ist dabei zum Zugriff auf das Versender-Konto nach einem vorbestimmten Reduzierungskriterium ausgebildet.

Dieser Zugriff kann direkt erfolgen, indem die Vermittler-Datenverarbeitungseinrichtung direkt auf ein Konto des Versenders zugreift, welches beispielsweise in einem so genannten prepaid-Verfahren beim Vermittler in Form eines mit der Vermittler-Datenverarbeitungseinrichtung verbundenen Speichers geführt wird. Dieser Speicher enthält Daten hinsichtlich des dem betreffenden Versender zugeordneten Guthabens. Dieses Guthaben wird dann durch Zugriff auf den betreffenden Speicher durch die Vermittler-Datenverarbeitungseinrichtung reduziert.

Das Reduzierungskriterium kann ein zeitliches Kriterium sein. So kann vereinbart sein, dass die Reduzierung zu einem bestimmten Zeitpunkt, beispielsweise wöchentlich jeweils am Wochenanfang, erfolgt. Ebenso kann es sich um ein Mengenkriterium handeln. So kann nach Eingang und Ausführung einer bestimmter Menge von Versandaufträgen reduziert werden. Es versteht sich natürlich, dass diese Kriterien auch miteinander kombiniert werden können und dabei bestimmten Vorrang haben können. So kann beispielsweise vorgesehen sein, dass die Reduzierung jeweils nach Ablauf eines bestimmten Zeitraumes erfolgt, in jedem Fall aber nach Erreichen einer bestimmten Menge an Poststücken, unabhängig davon, ob der vorgegebene Zeitraum seit der letzten Abrechnung bereits abgelaufen ist.

Bei bevorzugten Varianten erfolgt die Reduzierung unmittelbar nach Eingang des Versandauftrags und Auswahl des Carriers, um einen zeitnahen Überblick über die anfallenden Kosten zu wahren.

Ebenso ist es möglich, dass der Zugriff der Vermittler-Datenverarbeitungseinrichtung auf das Versender Konto indirekt erfolgt. Dies ist beispielsweise bei bevorzugten Varianten des erfindungsgemäßen Systems, bei denen eine Bank-Datenverarbeitungseinrichtung vorgesehen ist, die über eine Kommunikationsverbindung mit der Vermittler-Datenverarbeitungseinrichtung verbunden werden kann. Diese Vermittler-Datenverarbeitungseinrichtung ist wiederum zur Erstellung und Übermittlung eines Abbuchungsauftrages zur Abbuchung eines Rechnungsbetrages von einem Versender-Konto an die Bank-Datenverarbeitungseinrichtung ausgebildet ist. Die Erstellung und Übermittlung des Abbuchungsauftrages erfolgt wiederum nach einem oben bereits beschriebenen, vorbestimmten Abbuchungskriterium.

Bevorzugt erfolgt auch hier unmittelbar nach Eingang des Versandauftrages und Auswahl des Carriers die Erstellung und Übermittlung des Abbuchungsauftrages. Mit anderen Worten sind der Eingang des Versandauftrages und die erfolgte Auswahl des Carriers das Abbuchungskriterium.

Bei günstigen Ausgestaltungen des erfindungsgemäßen Systems ist eine Bank-Datenverarbeitungseinrichtung vorgesehen, die über eine Kommunikationsverbindung mit der Vermittler-Datenverarbeitungseinrichtung verbunden werden kann. Die Vermittler-Datenverarbeitungseinrichtung ist zur Erstellung und Übermittlung eines Überweisungsauftrages zur Überweisung eines Beförderungsentgeltes von einem Vermittler-Konto auf ein Carrier-Konto an die Bank-Datenverarbeitungseinrichtung ausgebildet. Die Erstellung und Übermittlung des Abbuchungsauftrages erfolgt wiederum nach einem oben bereits beschriebenen, vorbestimmten Überweisungskriterium.

Die Vermittler-Datenverarbeitungseinrichtung ist bevorzugt zum Erzeugen ein Paares aus einer ersten Identifikationskennung zum Verknüpfen mit dem Poststück und einer zweiten Identifikationskennung zur Weitergabe an den Carrier nach Eingang des Versandauftrages ausgebildet ist. Diese erste und zweite Identifikationskennung stehen dabei in der oben bereits beschriebenen Weise miteinander in einer vorgegebenen Beziehung. Hierdurch ist es möglich, die Vorteile der oben ebenfalls bereits beschriebenen Verifikation der einzelnen Poststücke bzw. Poststapel durch eine Überprüfung der mit ihnen verknüpften ersten Identifikationskennung in rationeller Weise zu nutzen.

Besonders schell und effektiv gestaltet sich dies bei bevorzugten Ausgestaltungen des erfindungsgemäßen Systems, bei denen die Vermittler-Datenverarbeitungseinrichtung zum Übermitteln der ersten Identifikationskennung an die Versender-Datenverarbeitungseinrichtung ausgebildet ist. Die Übermittlung erfolgt dabei bevorzugt über dieselbe Kommunikationsverbindung, die schon zur Übermittlung des Versandauftrages genutzt wurde. Es kann jedoch natürlich auch eine andere Kommunikationsverbindung genutzt werden.

Eine weitere Rationalisierung ergibt sich, wenn zusätzlich eine Einrichtung zum Verknüpfen der ersten Identifikationskennung mit dem Poststück vorgesehen ist, die mit der Versender-Datenverarbeitungseinrichtung verbunden ist. Hierbei kann es sich um einen einfachen Drucker handeln, welcher die Kennung auf das Poststück selbst oder auf einen mit dem Poststück oder einen Poststückstapel etc. zu verbindenden Informationsträger aufdruckt. Dieser Informationsträger kann entweder ein einfacher Zettel, ein einfaches Formular oder aber auch ein Aufkleber sein. Ebenso kann hierzu aber auch eine herkömmliche Frankiermaschine verwendet werden.

Bei einer weiteren bevorzugten, weil weiter automatisierten Ausführung des erfindungsgemäßen Systems ist wenigstens eine Carrier-Datenverarbeitungseinrichtung des ausgewählten Carriers vorgesehen, die mit der Vermittler-Datenverarbeitungseinrichtung über eine Kommunikationsverbindung verbunden werden kann. Die Vermittler-Datenverarbeitungseinrichtung ist weiterhin zum Übermitteln der zweiten Identifikationskennung an die Versender-Datenverarbeitungseinrichtung ausgebildet.

Bevorzugt ist dabei dann eine Überprüfungseinrichtung vorgesehen, die mit der Carrier-Datenverarbeitungseinrichtung verbunden ist und zum Lesen und Vergleichen der mit dem Poststück verbundenen ersten 1-dentifikationskennung mit der zweiten Identifikationskennung ausgebildet ist, um so eine weitestgehend automatisierte Postverarbeitung zu ermöglichen.

Weitere bevorzugte Ausführungen sind in den Unteransprüchen niedergelegt oder ergeben sich aus der nachstehenden Beschreibung bevorzugter Varianten der Erfindung anhand der beigefügten Zeichnungen.

### Kurze Beschreibung der Zeichnungen

Figur 1 zeigt ein Blockdiagramm eines erfindungsgemäßen Systems zur Durchführung des erfindungsgemäßen Verfahrens zum Vermitteln von Versandaufträgen für Poststücke;
Figur 2 zeigt ein Ablaufdiagramm einer bevorzugten Variante des erfindungsgemäßen Verfahrens, die mit dem System nach Fig. 1 durchgeführt werden kann;
Figur 3 zeigt ein Blockdiagramm eines weiteren erfindungsgemäßen Systems zur Durchführung des erfindungsgemäßen Verfahrens zum Vermitteln von Versandaufträgen für Poststücke;
Figur 4 zeigt ein Ablaufdiagramm einer weiteren bevorzugten Variante eines erfindungsgemäßen Verfahrens, die mit dem System nach Fig. 3 durchgeführt werden kann.

### Detaillierte Beschreibung bevorzugter Ausführungen der Erfindung

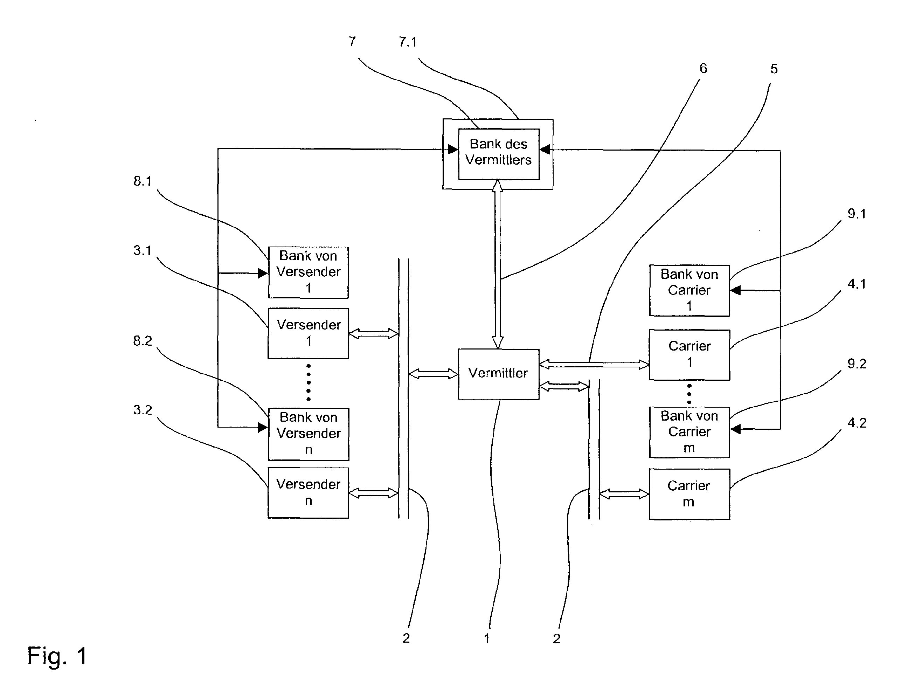

Anhand von Figur 1 soll ein bevorzugtes Ausführungsbeispiel der erfinderischen Lösung erläutert werden.

Der Vermittler betreibt eine Vermittler-Datenverarbeitungseinrichtung in Form einer Datenzentrale 1. Diese Datenzentrale 1 steht einerseits über ein Datennetz 2 mit den Versender-Datenverarbeitungseinrichtungen von n verschiedenen Versendern und andererseits mit den Carrier-Datenverarbeitungseinrichtungen von m verschiedenen Carriern in Verbindung. In Figur 1 sind aus Gründen der Übersichtlichkeit nur die Versender-Datenverarbeitungseinrichtung 3.1 des Versenders 1 und die Versender-Datenverarbeitungseinrichtung 3.2 des Versenders n sowie die Carrier-Datenverarbeitungseinrichtung 4.1 des Carriers 1 und die Carrier-Datenverarbeitungseinrichtung 4.2 des Carriers m dargestellt.

Die Versender-Datenverarbeitungseinrichtungen 3.1 und 3.2 sind PC-Frankiereinrichtungen. Als geeignetes Datennetz 2 für die Datenverbindung der Datenzentrale 1 mit den Versender-Datenverarbeitungseinrichtungen 3.1 und 3.2 wird ein Datennetz wie das Internet eingesetzt, wobei die Versender-Datenverarbeitungseinrichtungen 3.1 und 3.2 über Modem oder ein anderes bekanntes Datenumsetzungsmittel an das Datennetz 2 angekoppelt sind.

Es versteht sich jedoch, dass bei anderen Varianten der Erfindung die Versender-Datenverarbeitungseinrichtungen als klassische Frankiermaschinen ausgeführt sein können. Die Verbindung zur Datenzentrale des Vermittlers kann dann durch ein Telefonnetz auch über das der Frankiermaschine üblicherweise zugeordnete Modem und ein vom Hersteller implementiertes Protokoll hergestellt werden.

Für die Verbindung zur Carrier-Datenverarbeitungseinrichtung 4.2 kommt ebenfalls das Datennetz 2, beispielsweise das Internet, zum Zuge. Für die Verbindung zur Carrier-Datenverarbeitungseinrichtung 4.1 eines besonders häufig frequentierten Carriers ist eine Datenstandleitung 5 vorgesehen.

Es versteht sich jedoch, dass bei anderen Varianten auch nur solche Datennetze oder nur solche Datenstandleitungen für die Verbindungen zwischen der Datenzentrale des Vermittlers und den Carrier-Datenverarbeitungseinrichtungen bzw. Sender-Datenverarbeitungseinrichtung verwendet werden können.

Die Datenzentrale 1 ist weiterhin über eine Datenstandleitung 6 mit der Bank-Datenverarbeitungseinrichtung 7 der Vertragsbank 7.1 des Vermittlers verbunden. Es versteht sich, dass aber auch hier verschiedenste andere Datenverbindungen ihren Einsatz finden können.

Die Versender führen bei ihrer jeweiligen Vertragsbank 8.1 bzw. 8.2 ein Konto, von welchem Rechnungsbeträge des Vermittlers abgebucht werden können. Sie haben hierzu dem Vermittler entsprechende Einzugsermächtigungen erteilt, welche dieser wiederum an seine Vertragsbank 7.1 weitergegeben hat. Diese Variante sichert einen schnellen Geldtransfer für den Vermittler und ist für den Versender aufwandsarm.

Auf Anweisung der Datenzentrale 1, die an die Bank-Datenverarbeitungseinrichtung 7 der Vertragsbank 7.1 übermittelt wird, wird an die Vertragsbank 9.1 eines Carriers ein Betrag für dessen Postdienstleistung überwiesen. Dieser Betrag entspricht im vorliegenden Ausführungsbeispiel der Summe der Beförderungsentgelte für die Poststücke jener Versender, welche in der Berechnungsperiode unter Inanspruchnahme der Dienste dieses Carriers versandt wurden. Entsprechend werden an die anderen Carrier ebenfalls Geldbeträge berechnet und überwiesen, die der summarischen Inanspruchnahme ihrer Dienstleistungen entsprechen.

Die zu vereinbarende Berechnungsperiode für den Versender, also das Abbuchungskriterium, ist im einfachsten Fall identisch mit der Berechnungsperiode für den Carrier, also dem Überweisungskriterium. Effizienter ist allerdings, für den jeweiligen Versender eine längere Berechnungsperiode, z.B. eine Woche, vorzusehen und für den jeweiligen Carrier eine kürzere, z.B. einen Tag, vorzusehen, da durch die Kumulierung über mehrere Versender bereits an einem Tag relevante Geldbeträge an den Carrier zu überweisen sind.

Selbstverständlich kann die Berechnungsperiode für einzelne Versender in Abhängigkeit von deren durchschnittlichen Postaufkommen unterschiedlich festgelegt werden. Ebenso ist dies auf der Seite der Carrier möglich. Entscheidend ist, dass durch die Verdichtung der Einzelabrechnungen durch die Datenzentrale 1 des Vermittlers sowohl die Versender als auch die Carrier von Abrechnungsaufwand entlastet werden.

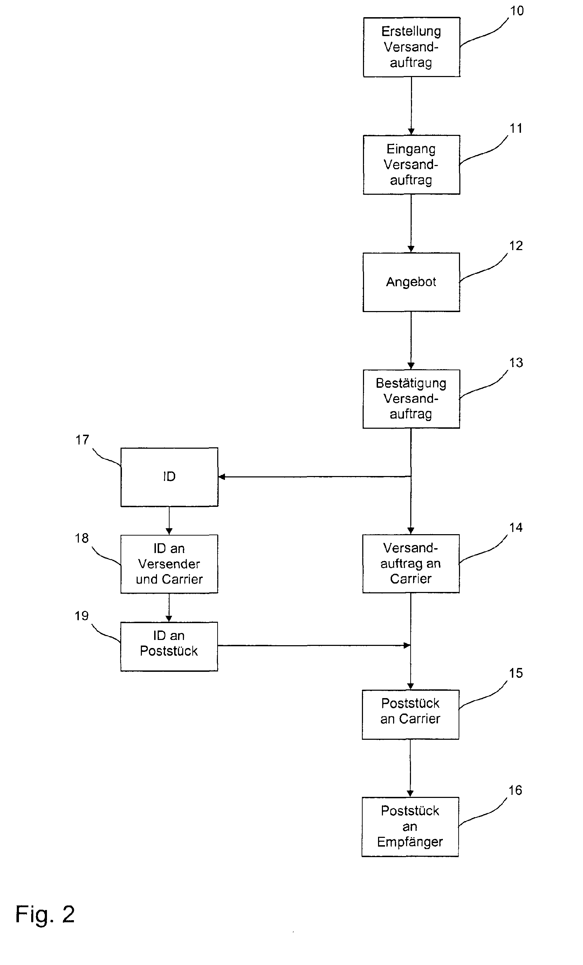

Mit dem zu Figur 1 beschriebenen System läuft eine Mailingaktion eines Versenders wie in Figur 2 dargestellt ab.

Es wird angenommen der Versender möchte eine Werbeaussendung an bestimmte Kunden einer bestimmten Vertriebsregion versenden. Die jeweiligen Poststücke weisen dabei eine bestimmte Größe und Gewicht auf. Der Versender erstellt mit Hilfe der Versender-Datenverarbeitungseinrichtung 3.1 in Schritt 10 einen Versandauftrag, der die genannten Parameter Anzahl, Format, Gewicht, Region etc. sowie das Auswahlkriterium "kostengünstigster Versand" enthält.

Der Vermittler hat zur Erleichterung der Auswertung Anforderungsformulare entwickelt, mit denen er die für die Erstellung des Versandauftrages relevanten Parameter vorgibt. Dieses Formular kann über die Homepage des Vermittlers aufgerufen und dem Versender auf seiner Versender-Datenverarbeitungseinrichtung 3.1 angezeigt werden. Dieser füllt dann die entsprechenden Felder mit den Parametern seiner geplanten Mailingaktion aus und erstellt so den Versandauftrag.

Dieser Versandauftrag wird dann in Schritt 11 mittels der Versender-Datenverarbeitungseinrichtung 3.1 über das Datennetz 2 an die Datenzentrale 1 des Vermittlers übersandt.

Die Datenzentrale 1 des Vermittlers ermittelt in Schritt 12 mit diesen vom Versender gelieferten Daten den für diesen Versandauftrag günstigsten Carrier und unterbreitet dem Versender ein entsprechendes Angebot, welches von der Datenzentrale 1 über das Datennetz 2 an die Versender-Datenverarbeitungseinrichtung 3.1 gesandt wird. Ist der Versender damit einverstanden, kann er im einfachsten Fall in Schritt 13 durch Bestätigung in einem entsprechenden Feld des Anforderungsformulars und erneuter Übersendung den Versandauftrag durch Bestätigung gültig machen.

Es versteht sich jedoch, dass bei anderen Varianten des Erfindungsgemäßen Verfahrens vorgesehen sein kann, dass der Versender kein Angebot mehr bekommt, welches er noch zu bestätigen hätte, sondern der Vermittler bereits nach erstmaligem Eingang den günstigsten Carrier auswählt und den Auftrag ausführt.

Um den günstigsten Carrier ermitteln zu können verfügt die Datenzentrale 1 über die aktuellen Postdienstleistungen und zugehörigen Portotabellen von den verschiedenen Carriern. Ändern sich die Struktur der Postdienstleistungen oder die Tarife, werden diesen Änderungen von den Carriern mittel ihrer Carrier-Datenverarbeitungseinrichtungen 9.1 bzw. 9.2 an die Datenzentrale 1 des Vermittlers gemeldet. Auch zeitlich begrenzt geltende Tarife (Sonderangebote) werden in der Datenzentrale 1 gespeichert und bei entsprechender Anforderung an den Versender weitergegeben. Die günstigste Methode geänderte Portotabellen des Carriers verfügbar zu machen, besteht darin, dass dieser entsprechend formatierte Datensätze an die Datenzentrale 1 überträgt. Diese kann er mit einem Datum versehen, ab welchem die neuen Portotabellen gültig sind.

Hat der Versender den Versandauftrag erteilt und bestätigt, wird dieser zusammen mit der Versenderanschrift von der Datenzentrale 1 des Vermittlers in Schritt 14 an die Carrier-Datenverarbeitungseinrichtung 9.1 des im gezeigten Beispiel ausgewählten Carriers weitergeleitet. Dort wird der Versandauftrag registriert und die Ausführung gestartet.

In der Regel wird ein Kurier zum Versender gesandt, der in Schritt 15 dessen Poststücke abholt und dem carrierinternen Verteilzentrum zuführt. Dort werden die Poststücke entsprechend der Zielregion sortiert und schließlich in Schritt 16 an den Adressaten ausgeliefert. Findet eine Vorsortierung seitens des Versenders statt, kann diese durch einen Rabatt vergütet werden.

Die Dienstleistung des Vermittlers wird im gezeigten Fall auf folgende Weise vergütet. Die einzelnen Portowerte in den Portotabellen, welche im Datenzentrum 1 für jeden Carrier gespeichert sind, enthalten einen entsprechenden prozentualen Aufschlag, z.B. 1% des Portowertes, welcher vom Vermittler nicht an den Carrier weitergegeben, sondern einbehalten wird. Eine Rabattierung entsprechend dem Umfang des Versandauftrages ist durch gestaffelte Prozentzahlen möglich. Eine andere Methode besteht darin, dem Postkunden im Lastschriftverfahren die Dienstleistung des Vermittlers zusätzlich in Rechnung zustellen.

In oben genannter Ausführungsform der erfinderischen Lösung wird ein Vertrag zwischen dem Versender und einem Carrier herbeigeführt, wobei der Vermittler informiert und vermittelt.

In einer alternativen Variante beauftragt der Versender den Vermittler mit dem Versand. Der Vermittler hat diverse Carrier zur Ausführung vertraglich an sich gebunden. Der Unterschied zu obigem Ausführungsbeispiel besteht darin, dass nach Anforderung durch den Versender der Vermittler nicht mehr ein Angebot des Carriers auswählt und zustellt, sondern ein Angebot in seinem eigenen Namen macht. Das bedeutet, dass er aus Marketinggründen dem Postkunden ein von den Bedingungen des ausführenden Carriers unabhängiges Angebot machen kann. Dies kann z.B., um einen neuen Kunden zu gewinnen, unterhalb der Kosten des ausführenden Carriers liegen.

Auch hat der Vermittler auf dieses Weise die Möglichkeit mit den Carriern Rabatte auszuhandeln, welche auf dem Auftragsvolumen beruhen, welches der Vermittler an den jeweiligen Carrier vergibt und nicht auf dem Auftragsvolumen, das einzelne Versender an den Carrier vergeben. Da das durch den Vermittler vergebene Auftragsvolumen regelmäßig größer ist als das der einzelnen Versender, ist der auszuhandelnde Rabattbetrag größer. Von diesem Rabattbetrag kann wiederum ein Teil an die Versender weitergegeben werden. Eine gesonderte Berechnung der Dienstleistung des Vermittlers entfällt.

Es ist sicherzustellen, dass nur jene Poststücke vom Carrier transportiert werden, für welche der Postkunden einen Auftrag erteilt hat und demzufolge eine Abrechnung erfolgt. Es muss verhindert werden, dass der Postkunde mehr Poststücke oder andere als die vereinbarten Poststücke an den Carrier übergibt, um sich einen unberechtigten finanziellen Vorteil zu verschaffen. Auch ist zu verhindern, dass Poststücke von Dritten aufgegeben werden, welche sich mit gefälschten Angaben als scheinbar echte Postkunden ausweisen.

Im folgenden wird ein einfach zu handhabendes Sicherheitssystem beschrieben, welches obige Manipulationen verhindert.

Dazu wird nach eingegangenem und bestätigtem Versandauftrag vom Vermittler in Schritt 17 mit Hilfe der Datenzentrale 1 ein dem Versandauftrag zugeordnetes Paar aus einer ersten und zweiten Identifikationskennung in Form eines Paares zweier Zahlen erzeugt, welche identisch sind oder in einer vorbestimmten mathematischen Beziehung zueinander stehen. Zur Erhöhung der Sicherheit können die Zahlen soviel Stellen aufweisen, dass sie sich nicht wiederholen. Zum Beispiel sind bei einer zehnstelligen Zahl 9.999.999.999 unterschiedliche Kennzeichnungen möglich, womit auf absehbare Zeit alle Versandaufträge unterscheidbar gekennzeichnet werden können.

In Schritt 18 wird die erste Identifikationskennung, also die erste Zahl, von der Datenzentrale 1 über das Datennetz 2 an die Versender-Datenverarbeitungseinrichtung 3.1 des auftraggebenden Versenders übertragen; die zweite Identifikationskennung, also die zweite Zahl, wird von der Datenzentrale 1 über die Datenleitung 5 an die Carrier-Datenverarbeitungseinrichtung 9.1 des ausgewählten Carriers übertragen. Diese Übertragung kann zur Erhöhung der Sicherheit verschlüsselt erfolgen, z.B. durch Anwendung eines bekannten Verschlüsselungsprogramms.

Der Versender kennzeichnet seine Poststücke in Schritt 19 mit dieser Zahl. Um diese Zahl maschinenlesbar zu machen, erfolgt die Kennzeichnung vorzugsweise mittels eines Barcodes, welcher die Zahl repräsentiert. Der Abdruck dieser Kennzeichnung erfolgt bei Briefen in einfacher Weise im Adressfeld des Briefes, welches durch das Fenster eines Fensterkuverts gelesen werden kann. Eine alternative Methode ist der Abdruck der Kennzeichnung auf dem Kuvert. Für letzteres können Labels aufgeklebt werden oder die Druckeinrichtung einer Frankiermaschine zum Einsatz kommen.

Die an den Carrier übertragene zweite Zahl versetzt diesen in die Lage, durch Vergleich mit der Kennzeichnung auf den aufgegebenen Poststücken diese dem Versandauftrag zuordnen zu können. Dieser Vergleich kann z.B. automatisiert im Postverteilzentrum des Carriers durch Scannen der eingehenden Poststücke erfolgen. Alternativ ist die Erfassung bei Abholung der Poststücke beim Versender durch den Carrier möglich, indem der Abholer einen Scanner besitzt, in welchem die ausstehenden Zahlen gespeichert sind, oder der eine Verbindung zur Carrier-Datenverarbeitungseinrichtung 9.1 oder zum Datenzentrum 1 des Vermittlers herzustellen gestattet, wo dann der Vergleich durchgeführt wird.

Eine alternatives Verfahren der Verhinderung von betrügerischen Manipulationen besteht darin, die Poststücke mit Informationen zu versehen, welche eine Bestimmung des Wertes für den Versand dieser Poststücke gestatten. Derartige Informationen sind Datum, Absender, Größe, Gewicht, Zieladresse oder andere. Diese Informationen können durch entsprechende beim Versender installierte Programme aus dem Versandauftrag generiert werden. Zusätzlich kann auf diese Weise auch noch mit Hilfe eines Schlüssels eine digitale Unterschrift erzeugt werden, die der Authentisierung der Informationen dient. Diese Daten können dann in prinzipiell gleicher Weise wie oben beschrieben auf das Poststück gedruckt werden. Auf der Carrierseite werden diese Informationen gelesen und mit einem zugehörigen Schlüssel die digitale Unterschrift verifiziert. Die Erzeugung und Verwaltung der Schlüssel wird vom Datenzentrum 1 des Vermittlers durchgeführt.

Bei einer weiteren Variante ist der Vermittler selbst Anlieferungs- und Verteilzentrum für die Poststücke. Er kann die Poststücke beim Versender durch von ihm beauftragte Personen oder Dienste abholen lassen, oder der Postkunde liefert selbst die Poststücke ab, z.B. in dafür vorgesehene Briefkästen.

Der Brief oder der Briefstapel enthält eine Kennzeichnung des Frankierwertes und des Carriers. Ist diese Kennzeichnung maschinenlesbar, z.B. durch einen Barcode wird zudem eine dritte Abrechnungsform ermöglicht. Dabei löst der im Einlieferungs- und Verteilzentrum mittels der mit ihm verknüpften Identifikationskennung erfasste Brief oder Briefstapel unmittelbar die Abrechnung der Postdienstleistung für den Versender aus.

In einer Untervariante enthält der Brief lediglich einen maschinenlesbaren Identifikationskennung. Auf der Basis der erfassten Identifikationskennung, beispielsweise eines gescannten Codes wird im Datenzentrum des Versenders der Versandauftragsdatensatz für den Brief bzw. Briefstapel identifiziert. Der Vorteil dieses Verfahrens liegt darin, dass der Versender nur dann mit Versandgebühren belastet wird, wenn das Poststück von ihm tatsächlich auf den Versandweg gebracht wurde. Ein weiterer Vorteil ergibt sich dadurch, dass der Versender seine Tagespost an nur einer Stelle einliefern kann oder von nur einem Dienst abholen lässt, obwohl seine Poststücke von unterschiedlichen Carriern an die Adressaten zugestellt werden soll.

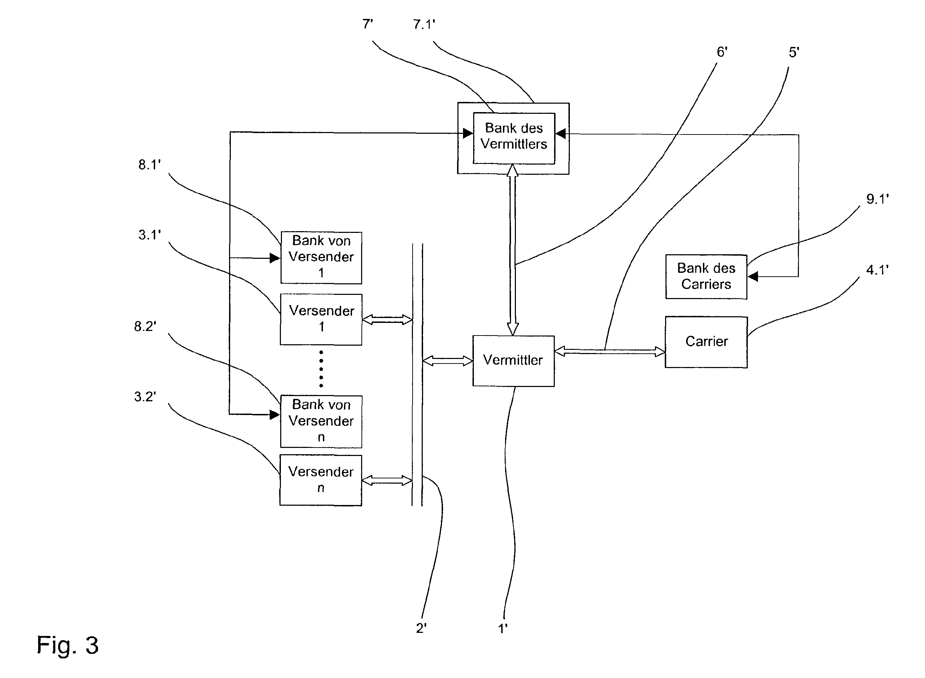

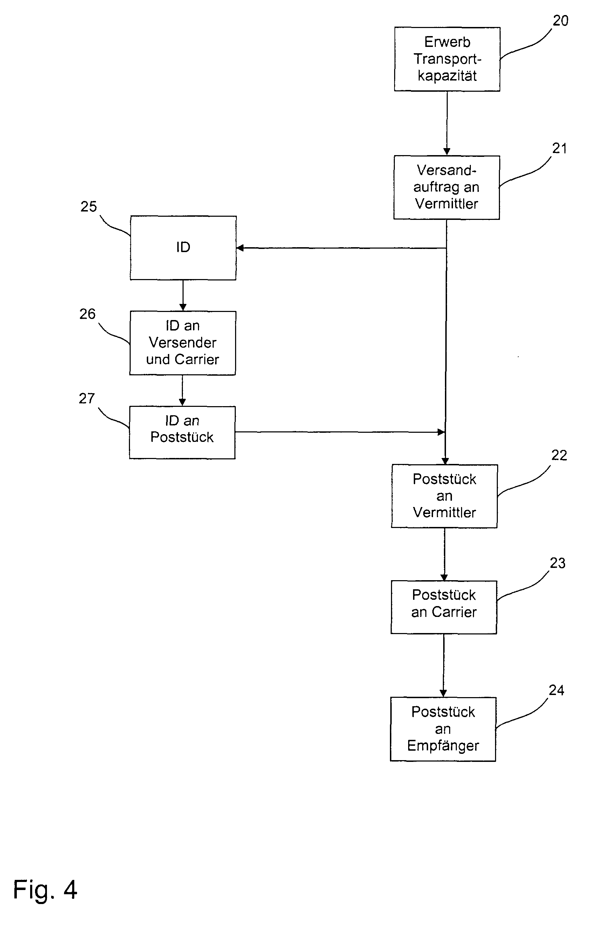

Figur 4 zeigt ein Ablaufdiagramm einer Variante eines weiteren erfindungsgemäßen Verfahrens, bei dem der Vermittler nur mit einem einzigen Carrier zusammenarbeitet. Dieses Verfahren kann mit einem System nach Figur 3 durchgeführt werden, welches dem zu Figur 1 beschriebenen System bis auf den Unterschied gleicht, dass nur ein einziger Carrier vorgesehen ist.

Der Vermittler erwirbt vorab in Schritt 20 von dem Carrier eine bestimmte Transportkapazität zu entsprechend günstigen Konditionen eines Großabnehmers. Diese günstigen Konditionen beruhen zum einen auf dem erwähnten hohen Auftragsvolumen, zum anderen können sie auch auf weiteren Dienstleistungen basieren, welche der Vermittler erbringt, beispilesweise einer Sortierung oder zumindest Vorsortierung der Poststücke.

Es wird angenommen der Versender möchte eine oder mehrere Sendungen an einen oder mehrere Empfänger versenden. Die jeweiligen Poststücke weisen dabei eine bestimmte Größe und Gewicht auf. Der Versender erstellt mit Hilfe der Versender-Datenverarbeitungseinrichtung 3.1' einen Versandauftrag, der die genannten Parameter Anzahl, Format, Gewicht, Region etc. enthält.

Der Vermittler hat zur Erleichterung der Auswertung Anforderungsformulare entwickelt, mit denen er die für die Erstellung des Versandauftrages relevanten Parameter vorgibt. Dieses Formular kann über die Homepage des Vermittlers aufgerufen und dem Versender auf seiner Versender-Datenverarbeitungseinrichtung 3.1' angezeigt werden. Dieser füllt dann die entsprechenden Felder mit den Parametern seiner geplanten Versandaktion aus und erstellt so den Versandauftrag.

Dieser Versandauftrag wird dann in Schritt 21 mittels der Versender-Datenverarbeitungseinrichtung 3.1' über das Datennetz 2 an die Datenzentrale 1 des Vermittlers übersandt.

Mit dem Versandauftrag beauftragt der Versender den Vermittler mit dem Versand der Poststücke. Der Vermittler kann aus Marketinggründen dem Versender ein von den Bedingungen des ausführenden Carriers unabhängiges Angebot machen. Dies kann z.B., um einen neuen Kunden zu gewinnen, unterhalb der Kosten des Carriers liegen.

Hat der Versender den Versandauftrag erteilt, wird dessen Ausführung gestartet. In der Regel wird ein Kurier des Vermittlers zum Versender gesandt, der in Schritt 22 dessen Poststücke abholt und dem vermittlerinternen Verteilzentrum zuführt. Dort werden die Poststücke entsprechend der Zielregion oder gemäß anderen Kriterien sortiert bzw. vorsortiert, um die Konditionen zu erfüllen, unter denen die Transportkapazitäten vom Carrier erworben wurden. In Schritt 23 erfolgt die Übergabe der Poststücke an den Carrier, der sie schließlich in Schritt 24 an den Adressaten ausliefert. Findet bereits eine Vorsortierung seitens des Versenders statt, so kann diese seitens des Versenders durch einen Rabatt vergütet werden.

Der Vermittler hat auf diese Weise die Möglichkeit, mit dem Carrier Rabatte auszuhandeln, welche auf dem Auftragsvolumen beruhen, welches der Vermittler durch den Voraberwerb der Transportkapazitäten an den Carrier vergibt, und nicht auf dem Auftragsvolumen, das einzelne Versender an den Carrier vergeben. Da das durch den Vermittler vergebene Auftragsvolumen größer ist als das der einzelnen Versender, ist der auszuhandelnde Rabattbetrag größer. Von diesem Rabattbetrag kann wiederum ein Teil an die Versender weitergegeben werden.

Es versteht sich, dass bei Varianten des Verfahrens auch nur ein Teil des von dem Vermittler an den Carrier weitergegebenen Postvolumens durch die vorab erworbenen Transportkapazitäten abgedeckt sein kann und der übrige Teil noch gesondert zwischen Vermittler und Carrier abgerechnet wird. Dies kann gegebenenfalls zu variablen Konditionen geschehen.

Es ist sicherzustellen, dass nur jene Poststücke vom Carrier transportiert werden, für welche der Postkunden einen Auftrag erteilt hat und demzufolge eine Abrechnung erfolgt. Es muss verhindert werden, dass mehr Poststücke oder andere als die vereinbarten Poststücke an den Vermittler und den Carrier übergeben werden, um sich einen unberechtigten finanziellen Vorteil zu verschaffen. Auch ist zu verhindern, dass Poststücke von Dritten aufgegeben werden, welche sich mit gefälschten Angaben als scheinbar echte Postkunden ausweisen.

Im folgenden wird ein einfach zu handhabendes Sicherheitssystem beschrieben, welches obige Manipulationen verhindert.

Dazu wird nach eingegangenem Versandauftrag vom Vermittler in Schritt 25 mit Hilfe der Datenzentrale 1' ein dem Versandauftrag zugeordnetes Paar aus einer ersten und zweiten Identifikationskennung in Form eines Paares zweier Zahlen erzeugt, welche identisch sind oder in einer vorbestimmten mathematischen Beziehung zueinander stehen. Zur Erhöhung der Sicherheit können die Zahlen soviel Stellen aufweisen, dass sie sich nicht wiederholen. Zum Beispiel sind bei einer zehnstelligen Zahl 9.999.999.999 unterschiedliche Kennzeichnungen möglich, womit auf absehbare Zeit alle Versandaufträge unterscheidbar gekennzeichnet werden können.

In Schritt 26 wird die erste Identifikationskennung, also die erste Zahl, von der Datenzentrale 1' über das Datennetz 2' an die Versender-Datenverarbeitungseinrichtung 3.1' des auftraggebenden Versenders übertragen; die zweite Identifikationskennung, also die zweite Zahl, wird von der Datenzentrale 1' über die Datenleitung 5' an die Carrier-Datenverarbeitungseinrichtung 9.1' des Carriers übertragen. Diese Übertragung kann zur Erhöhung der Sicherheit verschlüsselt erfolgen, z.B. durch Anwendung eines bekannten Verschlüsselungsprogramms.

Der Versender kennzeichnet seine Poststücke in Schritt 27 mit dieser Zahl. Um diese Zahl maschinenlesbar zu machen, erfolgt die Kennzeichnung vorzugsweise mittels eines Barcodes, welcher die Zahl repräsentiert. Der Abdruck dieser Kennzeichnung erfolgt bei Briefen in einfacher Weise im Adressfeld des Briefes, welches durch das Fenster eines Fensterkuverts gelesen werden kann. Eine alternative Methode ist der Abdruck der Kennzeichnung auf dem Kuvert. Für letzteres können Labels aufgeklebt werden oder die Druckeinrichtung einer Frankiermaschine zum Einsatz kommen.

Die an den Carrier übertragene zweite Zahl versetzt diesen in die Lage, durch Vergleich mit der Kennzeichnung auf den aufgegebenen Poststücken diese dem Versandauftrag zuordnen zu können. Dieser Vergleich kann z.B. automatisiert im Postverteilzentrum des Carriers durch Scannen der eingehenden Poststücke erfolgen. Alternativ ist die Erfassung bei Übergabe der Poststücke an den Vermittler möglich, indem der Abholer einen Scanner besitzt, in welchem die ausstehenden Zahlen gespeichert sind, oder der eine Verbindung zum Datenzentrum 1' des Vermittlers oder auch zur Carrier-Datenverarbeitungseinrichtung 9.1' herzustellen gestattet, wo dann der Vergleich durchgeführt wird.

Eine alternatives Verfahren der Verhinderung von betrügerischen Manipulationen besteht darin, die Poststücke mit Informationen zu versehen, welche eine Bestimmung des Wertes für den Versand dieser Poststücke gestatten. Derartige Informationen sind Datum, Absender, Größe, Gewicht, Zieladresse oder andere. Diese Informationen können durch entsprechende beim Versender installierte Programme aus dem Versandauftrag generiert werden. Zusätzlich kann auf diese Weise auch noch mit Hilfe eines Schlüssels eine digitale Unterschrift erzeugt werden, die der Authentisierung der Informationen dient. Diese Daten können dann in prinzipiell gleicher Weise wie oben beschrieben auf das Poststück gedruckt werden. Auf der Carrierseite werden diese Informationen gelesen und mit einem zugehörigen Schlüssel die digitale Unterschrift verifiziert. Die Erzeugung und Verwaltung der Schlüssel wird vom Datenzentrum 1 des Vermittlers durchgeführt.

Bei einer weiteren Variante liefert der Versender selbst die Poststücke ab, z.B. in dafür vorgesehene Briefkästen.

Die Abrechnung zwischen Vermittler und Versender erfolgt analog der oben zu Figur 1 beschriebenen Weise.

Die Versender führen bei ihrer jeweiligen Vertragsbank 8.1' bzw. 8.2' ein Konto, von welchem Rechnungsbeträge des Vermittlers abgebucht werden können. Sie haben hierzu dem Vermittler entsprechende Einzugsermächtigungen erteilt, welche dieser wiederum an seine Vertragsbank 7.1' weitergegeben hat. Diese Variante sichert einen schnellen Geldtransfer für den Vermittler und ist für den Versender aufwandsarm.

Auf Anweisung der Datenzentrale 1', die an die Bank-Datenverarbeitungseinrichtung 7' der Vertragsbank 7.1' übermittelt wird, wird zum Voraberwerb von Transportkapazitäten an die Vertragsbank 9.1' des Carriers ein Betrag für diese Transportkapazitäten überwiesen.

Für den Versender ist eine bestimmte Berechnungsperiode, also ein bestimmtes Abbuchungskriterium vereinbart. Dieses kann in der oben bereits ausführlich dargestellten Weise gestaltet sein. So ist beispielsweise eine wöchentliche Abrechnung möglich.

Selbstverständlich kann die Berechnungsperiode für einzelne Versender in Abhängigkeit von deren durchschnittlichen Postaufkommen unterschiedlich festgelegt werden. Entscheidend ist, dass durch die Verdichtung der Einzelabrechnungen durch die Datenzentrale 1' des Vermittlers sowohl die Versender als auch der Carrier von Abrechnungsaufwand entlastet werden. Eine weitere Entlastung des Carriers ergibt sich durch den Voraberwerb der Transportkapazitäten.

Bei Varianten der Erfindung kann der Brief oder der Briefstapel eine Kennzeichnung des Frankierwertes enthalten. Ist diese Kennzeichnung maschinenlesbar, z.B. durch einen Barcode wird eine weitere Abrechnungsform ermöglicht. Dabei löst der im Einlieferungs- und Verteilzentrum des Vermittlers mittels der mit ihm verknüpften Identifikationskennung erfasste Brief oder Briefstapel unmittelbar die Abrechnung der Postdienstleistung für den Versender aus.

In einer Untervariante enthält der Brief lediglich einen maschinenlesbaren Identifikationskennung. Auf der Basis der erfassten Identifikationskennung, beispielsweise eines gescannten Codes wird im Datenzentrum des Vermittlers der Versandauftragsdatensatz für den Brief bzw. Briefstapel identifiziert. Der Vorteil dieses Verfahrens liegt darin, dass der Versender nur dann mit Versandgebühren belastet wird, wenn das Poststück von ihm tatsächlich auf den Versandweg gebracht wurde.

Die Erfindung beschränkt sich nicht auf die vorstehend dargelegten Ausführungsbeispiele. Vielmehr ist eine Anzahl von Varianten denkbar, welche die Erfindung auch bei vom Vorbeschriebenen abweichender Ausführung verwirklichen.

## Patentansprüche

1. Verfahren zum Vermitteln von Versandaufträgen für Poststücke zwischen einem Versender und wenigstens einem Carrier, dessen Dienste zum Befördern des Poststücks zu einem Empfänger genutzt werden, wobei die Vermittlung durch einen Vermittler erfolgt, umfassend die Schritte:
- Entgegennahme des Versandauftrags des Versenders für wenigstens ein Poststück durch den Vermittler,
- Auswahl eines Carriers aus einer Anzahl verfügbarer Carrier nach wenigstens einem vorbestimmten Auswahlkriterium, wobei diese Auswahl vor oder nach Eingang des Versandauftrags beim Vermittler erfolgt,
- Weitergeben des Versandauftrages vom Vermittler an den ausgewählten Carrier.

2. Verfahren nach Anspruch 1, wobei die Auswahl des Carriers durch den Vermittler nach der Entgegennahme des Versandauftrags erfolgt.

3. Verfahren nach Anspruch 1, wobei die Abrechnung des Beförderungsentgeltes für das Poststück zwischen dem ausgewählten Carrier und dem Vermittler erfolgt und der Vermittler dem Versender einen Rechnungsbetrag in Rechnung stellt.

4. Verfahren nach Anspruch 3, wobei der Vermittler den Rechnungsbetrag von einem Versender-Konto des Versenders nach einem vorbestimmten Abbuchungskriterium abbucht.

5. Verfahren nach Anspruch 4, wobei der Vermittler den Rechnungsbetrag nach Eingang des Versandauftrags und Auswahl des Carriers von einem Versender-Konto des Versenders abbucht

6. Verfahren nach Anspruch 3, wobei der Vermittler das Beförderungsentgelt auf ein Carrier-Konto des ausgewählten Carriers nach einem vorbestimmten Überweisungskriterium überweist.

7. Verfahren nach Anspruch 3, wobei der Vermittler vorab von dem ausgewählten Carrier eine bestimmte Transportkapazität erwirbt.

8. Verfahren nach Anspruch 1, wobei der Vermittler nach Eingang des Versandauftrages ein Paar aus einer ersten Identifikationskennung zum Verknüpfen mit dem Poststück und einer zweiten Identifikationskennung zur Weitergabe an den Carrier erzeugt, die miteinander in einer vorgegebenen Beziehung stehen.

9. Verfahren zum Weiterleiten von Poststücken auf dem Weg von einem Versender zu einem Empfänger durch einen Vermittler, wobei die Beförderung des Poststückes vom Versender zum Empfänger unter Nutzung der Dienste wenigstens eines Carriers erfolgt, umfassend die Schritte:
- Entgegennahme eines Versandauftrags des Versenders für wenigstens ein Poststück durch den Vermittler,
- Auswahl eines Carriers aus einer Anzahl verfügbarer Carrier nach wenigstens einem vorbestimmten Auswahlkriterium, wobei diese Auswahl vor oder nach Eingang des Versandauftrags beim Vermittler erfolgt,
- Übergeben des Poststücks vom Versender an den Vermittler,
- Weitergeben des Versandauftrages vom Vermittler an den ausgewählten Carrier.
- Weitergeben des Poststückes an den ausgewählten Carrier.

10. Verfahren nach Anspruch 9, wobei die Auswahl des Carriers durch den Vermittler nach der Entgegennahme des Versandauftrags erfolgt.

11. Verfahren nach Anspruch 9, wobei die Abrechnung des Beförderungsentgeltes für das Poststück zwischen dem ausgewählten Carrier und dem Vermittler erfolgt und der Vermittler dem Versender einen Rechnungsbetrag in Rechnung stellt.

12. Verfahren nach Anspruch 11, wobei der Vermittler den Rechnungsbetrag von einem Versender-Konto des Versenders nach einem vorbestimmten Abbuchungskriterium abbucht.

13. Verfahren nach Anspruch 12, wobei der Vermittler den Rechnungsbetrag nach Eingang des Versandauftrags und Auswahl des Carriers von einem Versender-Konto des Versenders abbucht

14. Verfahren nach Anspruch 11, wobei der Vermittler das Beförderungsentgelt auf ein Carrier-Konto des ausgewählten Carriers nach einem vorbestimmten Überweisungskriterium überweist.

15. Verfahren nach Anspruch 11, wobei der Vermittler vorab von dem ausgewählten Carrier eine bestimmte Transportkapazität erwirbt.

16. Verfahren nach Anspruch 9, wobei der Vermittler nach Eingang des Versandauftrages ein Paar aus einer ersten Identifikationskennung zum Verknüpfen mit dem Poststück und einer zweiten Identifikationskennung zur Weitergabe an den Carrier erzeugt, die miteinander in einer vorgegebenen Beziehung stehen.

17. Verfahren nach Anspruch 16, wobei der Vermittler die ersten 1-dentifikationskennung zum Verknüpfen mit dem Poststück an den Versender weitergibt.

18. Verfahren zum Befördern von Poststücken von einem Versender zu einem Empfänger unter Nutzung der Dienste wenigstens eines Carriers zum Befördern des Poststücks zum Empfänger und unter Nutzung der Dienste eines Vermittlers zum Vermitteln der Versandaufträge zwischen Versender und Carrier umfassend die Schritte:
- Erstellen eines Versandauftrags für wenigstens ein Poststück durch den Versender,
- Übergeben des Versandauftrags an den Vermittler,
- Auswahl eines Carriers aus einer Anzahl verfügbarer Carrier nach wenigstens einem vorbestimmten Auswahlkriterium, wobei diese Auswahl vor oder nach Eingang des Versandauftrags beim Vermittler erfolgt,
- Weitergeben des Versandauftrages durch den Vermittler an den ausgewählten Carrier,
- Übergeben des Poststückes an den ausgewählten Carrier,
- Befördern des Poststücks zum Empfänger.

19. Verfahren nach Anspruch 18, wobei die Auswahl des Carriers durch den Vermittler nach Eingang des Versandauftrags erfolgt.

20. Verfahren nach Anspruch 18, wobei die Abrechnung des Beförderungsentgeltes für das Poststück zwischen dem ausgewählten Carrier und dem Vermittler erfolgt und der Vermittler dem Versender einen Rechnungsbetrag in Rechnung stellt.

21. Verfahren nach Anspruch 20 wobei der Vermittler den Rechnungsbetrag von einem Versender-Konto des Versenders nach einem vorbestimmten Abbuchungskriterium abbucht.

22. Verfahren nach Anspruch 21, wobei der Vermittler den Rechnungsbetrag nach Eingang des Versandauftrags und Auswahl des Carriers von einem Versender-Konto des Versenders abbucht.

23. Verfahren nach Anspruch 20, wobei der Vermittler das Beförderungsentgelt auf ein Carrier-Konto des ausgewählten Carriers nach einem vorbestimmten Überweisungskriterium überweist.

24. Verfahren nach Anspruch 18, wobei der Vermittler vorab von dem ausgewählten Carrier eine bestimmte Transportkapazität erwirbt.

25. Verfahren nach Anspruch 18, wobei der Vermittler nach Eingang des Versandauftrages ein Paar aus einer ersten Identifikationskennung zum Verknüpfen mit dem Poststück und einer zweiten Identifikationskennung zur Weitergabe an den Carrier erzeugt, die miteinander in einer vorgegebenen Beziehung stehen.

26. Verfahren nach Anspruch 25, wobei der Vermittler die erste Identifikationskennung zum Verknüpfen mit dem Poststück an den Versender weitergibt.

27. Verfahren zum Vermitteln von Versandaufträgen für Poststücke zwischen einem Versender und wenigstens einem Carrier, dessen Dienste zum Befördern des Poststücks zu einem Empfänger genutzt werden, wobei die Vermittlung durch einen Vermittler erfolgt, umfassend die Schritte:
- Voraberwerb einer bestimmten Transportkapazität von dem Carrier durch den Vermittler,
- Entgegennahme des Versandauftrags des Versenders für wenigstens ein Poststück durch den Vermittler,
- Weitergeben des Versandauftrages vom Vermittler an den Carrier unter Inanspruchnahme wenigstens eines Teiles der vorab erworbenen Transportkapazität.

28. Verfahren nach Anspruch 27, wobei die Abrechnung des Beförderungsentgeltes für das Poststück zwischen dem Carrier und dem Vermittler erfolgt und der Vermittler dem Versender einen Rechnungsbetrag in Rechnung stellt.

29. Verfahren nach Anspruch 28, wobei der Vermittler den Rechnungsbetrag von einem Versender-Konto des Versenders nach einem vorbestimmten Abbuchungskriterium abbucht.

30. Verfahren nach Anspruch 29, wobei der Vermittler den Rechnungsbetrag nach Eingang des Versandauftrags von einem Versender-Konto des Versenders abbucht.

31. Verfahren nach Anspruch 27, wobei der Vermittler nach Eingang des Versandauftrages ein Paar aus einer ersten Identifikationskennung zum Verknüpfen mit dem Poststück und einer zweiten Identifikationskennung zur Weitergabe an den Carrier erzeugt, die miteinander in einer vorgegebenen Beziehung stehen.

32. Verfahren nach Anspruch 27, wobei der Vermittler das Poststück entgegennimmt und an den Carrier weiterleitet.

33. System zum Vermitteln von Versandaufträgen für Poststücke zwischen einem Versender und wenigstens einem Carrier, dessen Dienste zum Befördern des Poststücks zu einem Empfänger genutzt werden, mit wenigstens einer Versender-Datenverarbeitungseinrichtung und einer zentralen Vermittler-Datenverarbeitungseinrichtung, wobei
- die Versender-Datenverarbeitungseinrichtung mit der Vermittler-Datenverarbeitungseinrichtung über eine Kommunikationsverbindung verbindbar ist,
- die Versender-Datenverarbeitungseinrichtung zum Übersenden eines Versandauftrags des Versenders für wenigstens ein Poststück an die Vermittler-Datenverarbeitungseinrichtung ausgebildet ist,
- die Vermittler-Datenverarbeitungseinrichtung und/oder die Versender-Datenverarbeitungseinrichtung zur Auswahl eines Carriers aus einer Anzahl verfügbarer Carrier nach wenigstens einem vorbestimmten Auswahlkriterium ausgebildet ist, wobei diese Auswahl vor oder nach Eingang des Versandauftrags beim Vermittler erfolgt.

34. System nach Anspruch 33, wobei wenigstens eine Carrier-Datenverarbeitungseinrichtung des ausgewählten Carriers vorgesehen ist, die Vermittler-Datenverarbeitungseinrichtung mit der Carrier-Datenverarbeitungseinrichtung über eine Kommunikationsverbindung verbindbar ist und die Vermittler-Datenverarbeitungseinrichtung zum Weitergeben des Versandauftrages an die Carrier-Datenverarbeitungseinrichtung des ausgewählten Carriers ausgebildet ist.

35. System nach Anspruch 33, wobei die Vermittler-Datenverarbeitungseinrichtung zur Auswahl des Carriers nach Eingang des Versandauftrags ausgebildet ist.

36. System nach Anspruch 33, wobei die Vermittler-Datenverarbeitungseinrichtung zum Zugriff auf ein Versender-Konto zur Reduzierung des Versender-Kontos um einen Rechnungsbetrag ausgebildet ist, wobei die Vermittler-Datenverarbeitungseinrichtung zum Zugriff auf das Versender-Konto nach einem vorbestimmten Reduzierungskriterium ausgebildet ist.

37. System nach Anspruch 33, wobei eine Bank-Datenverarbeitungseinrichtung vorgesehen ist, die über eine Kommunikationsverbindung mit Vermittler-Datenverarbeitungseinrichtung verbindbar ist und die Vermittler-Datenverarbeitungseinrichtung zur Erstellung und Übermittlung eines Abbuchungsauftrages zur Abbuchung eines Rechnungsbetrages von einem Versender-Konto an die Bank-Datenverarbeitungseinrichtung ausgebildet ist, wobei die Vermittler-Datenverarbeitungseinrichtung zur Erstellung und Übermittlung des Abbuchungsauftrages nach einem vorbestimmten Abbuchungskriterium ausgebildet ist.

38. System nach Anspruch 37, wobei der Eingang des Versandauftrags und die erfolgte Auswahl des Carriers das Abbuchungskriterium sind.

39. System nach Anspruch 33, wobei eine Bank-Datenverarbeitungseinrichtung vorgesehen ist, die über eine Kommunikationsverbindung mit Vermittler-Datenverarbeitungseinrichtung verbindbar ist und die Vermittler-Datenverarbeitungseinrichtung zur Erstellung und Übermittlung eines Überweisungsauftrages zur Überweisung eines Beförderungsentgeltes von einem Vermittler-Konto auf ein Carrier-Konto an die Bank-Datenverarbeitungseinrichtung ausgebildet ist, wobei die Vermittler-Datenverarbeitungseinrichtung zur Erstellung und Übermittlung des Überweisungsauftrages nach einem vorbestimmten Überweisungskriterium ausgebildet ist.

40. System nach Anspruch 33, wobei die Vermittler-Datenverarbeitungseinrichtung zum Erzeugen ein Paares aus einer ersten Identifikationskennung zum Verknüpfen mit dem Poststück und einer zweiten Identifikationskennung zur Weitergabe an den Carrier nach Eingang des Versandauftrages ausgebildet ist, wobei die erste und zweite Identifikationskennung miteinander in einer vorgegebenen Beziehung stehen.

41. System nach Anspruch 40, wobei die Vermittler-Datenverarbeitungseinrichtung zum Übermitteln der ersten Identifikationskennung an die Versender-Datenverarbeitungseinrichtung ausgebildet ist.

42. System nach Anspruch 41, wobei eine Einrichtung zum Verknüpfen der ersten Identifikationskennung mit dem Poststück vorgesehen ist, die mit der Versender-Datenverarbeitungseinrichtung verbunden ist.

43. System nach Anspruch 34, wobei wenigstens eine Carrier-Datenverarbeitungseinrichtung des ausgewählten Carriers vorgesehen ist, die Vermittler-Datenverarbeitungseinrichtung mit der Carrier-Datenverarbeitungseinrichtung über eine Kommunikationsverbindung verbindbar ist und die Vermittler-Datenverarbeitungseinrichtung zum Übermitteln der zweiten Identifikationskennung an die Versender-Datenverarbeitungseinrichtung ausgebildet ist.

44. System nach Anspruch 43, wobei eine Überprüfungseinrichtung vorgesehen ist, die mit der Carrier-Datenverarbeitungseinrichtung verbunden ist und zum Lesen und Vergleichen der mit dem Poststück verbundenen ersten Identifikationskennung mit der zweiten Identifikationskennung ausgebildet ist.
